(19) **Europäisches Patentamt / European Patent Office / Office européen des brevets**

(11) **EP 3 361 649 B1**

(12) **EUROPEAN PATENT SPECIFICATION**

(45) Date of publication and mention
of the grant of the patent:
**26.05.2021 Bulletin 2021/21**

(51) Int Cl.:
*H04B 7/0456* (2017.01)    *H04B 7/08* (2006.01)

(21) Application number: **17155109.6**

(22) Date of filing: **08.02.2017**

(54) **LOW-COMPLEXITY BEAM SELECTION METHOD**

VERFAHREN ZUR AUSWAHL VON STRAHLEN MIT GERINGER KOMPLEXITÄT

PROCÉDÉ DE SÉLECTION DE FAISCEAU DE FAIBLE COMPLEXITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.08.2018 Bulletin 2018/33**

(73) Proprietor: **Vodafone GmbH
40549 Düsseldorf (DE)**

(72) Inventors:
• **Chiang, Hsiao-Lan
01217 Dresden (DE)**
• **Fettweis, Gerhard
01326 Dresden (DE)**

(74) Representative: **Keenway Patentanwälte
Neumann Heine Taruttis
PartG mbB
Postfach 10 33 63
40024 Düsseldorf (DE)**

(56) References cited:
**WO-A1-2016/074706    US-A1- 2016 173 176**

**Description**

The invention is related to a method for steering vector selection in a receiver of a communication system, in particular for Multiple Input Multiple Output (MIMO) systems having a receiver with an array of a multitude of antennas. Further, the invention is related to a respective communication system, particularly a millimetre wave (mmWave) system. mmWave beamforming technology together with a large antenna array used for mobile communications is one of the key technologies of the fifth generation, which is the so called 5G technology of mobile communication.

Technical Background

At mmWave systems, a combination of analog beamforming (ABF, operating in passband) and digital beamforming (DBF, operating in baseband) is one of the low-cost solutions to higher data rate transmission. This combination is commonly denoted as hybrid beamforming (HBF). One analog beamformer can be represented by one steering vector, which consists of multiple phase shifts selected from a predefined codebook and implemented at different antennas. Based on the selected phase shifts, the steering vector compensates for the time delay difference between the signals from different receive antennas and combines the signals coherently to enhance the reception from the desired direction(s). Selecting several beam patterns simultaneously provides, after down conversion, the input to digital beamforming (DBF) that is to be optimally combined according to some criteria, e.g. to maximize mutual information. The effect of beam forming and/or beam selection usually becomes more pronounced with larger antenna arrays.

With a large number of antennas, the method for beam selection requires great computation power because the computational complexity increases exponentially with the size of an antenna array. In literature the use of steering vector(s) selected from a finite set at a receiver is also known as beam selection. Compared with most prior approaches, the invention significantly reduces the computational complexity by using the relationship between a uniform linear antenna array and a uniform rectangular antenna array.

In the proposed method, at least one of the transmitter (e.g., an access point) and receiver (e.g., a user terminal) has to employ a large antenna array. In order not to obscure the invention, we simply assume that the transmitter uses an omnidirectional antenna while the receiver is equipped with a large antenna array, so that the adopted system can be viewed as a SIMO (single in multiple out) system. Specifically, with a single antenna used at the transmitter, electromagnetic waves can be emitted omnidirectionally (or quasi-omnidirectionally, i.e. the signal is transmitted into a large angular range so that only the receiver experiences different angles of arrival (AoAs) by the antenna array (instead of the transmitter and receiver experience angles of departure and arrival respectively).

Analogously the same procedure to finish beam selection can be repeated at the access point, that is, adopting an omnidirectional antenna at the user terminal and implementing beam selection at the access point in uplink. Moreover, the same procedure can be extended to select steering vectors at the transmitter and receiver simultaneously.

In addition to conventional frequency division multiple access schemes, the directional antenna arrays enable more user terminals to be served in the communication system because multiple nearly uncorrelated paths can be assigned to different users, i.e., each user can be allocated to a restricted angular range for data transmission. Consequently, the same frequency band (or narrow frequency range) can be reused by a multitude of users. Hence, a method of low-complexity beam selection is required.

WO 2016/074706 A1 discloses determining an angle of departure for a MIMO system.

US 2016/0173176 A1 discloses determining weight coefficients for antenna elements for forming a three-dimensional beam.

SUMMARY OF THE INVENTION

The invention is defined by a method and a receiver according to independent claims 1 and 15. Preferred embodiments are described in the dependent claims.

BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only illustrated embodiments of the invention and are therefore not to be considered limiting of its scope. The invention will be described and explained with additional specificity and detail through the use of the accompanying drawings, wherein the figures show:

Fig. 1            a schematic of a wireless communication system,

Fig. 2          a schematic perspective view of the rectangular antenna array of figure 1,

Fig. 3          a schematic detailed top view of the rectangular antenna array of figures 1 and 2,

Fig. 4          a schematic of a beamforming system with analog beamforming structures,

Fig. 5          a schematic detailed perspective view of one analog beamforming system by using a URA,

Fig. 6          an example of the weighted rectangular array signal as a function of the spatial frequency indices,

Fig. 7a to 7b     a schematic detailed perspective view of one analog beamforming system by using a ULA,

Fig. 8 to 9       visualizations of the first, the second, and the third preferred embodiment of the described beam selection method,

Fig. 10 to 11     visualizations of the first preferred embodiment of the described beam selection method,

Fig. 12 to 13     visualization of the part of a second preferred embodiment of the described beam selection method,

Fig. 14 to 15     visualizations of the third preferred embodiment of the described beam selection method,

DETAILED DESCRIPTION

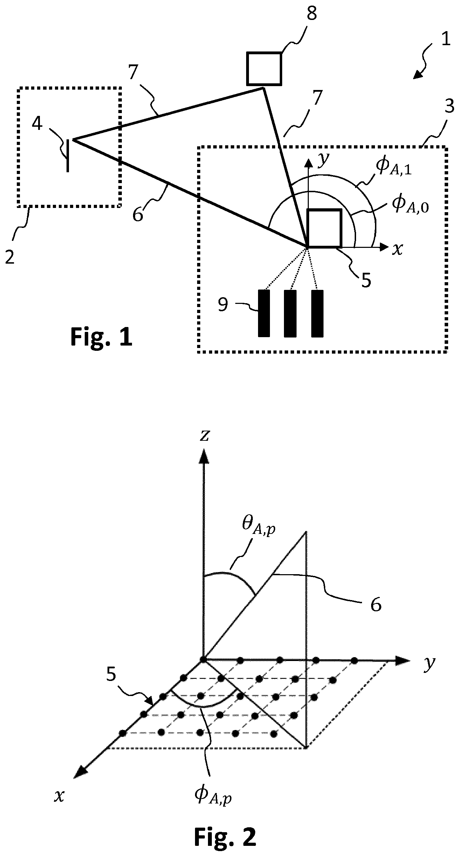

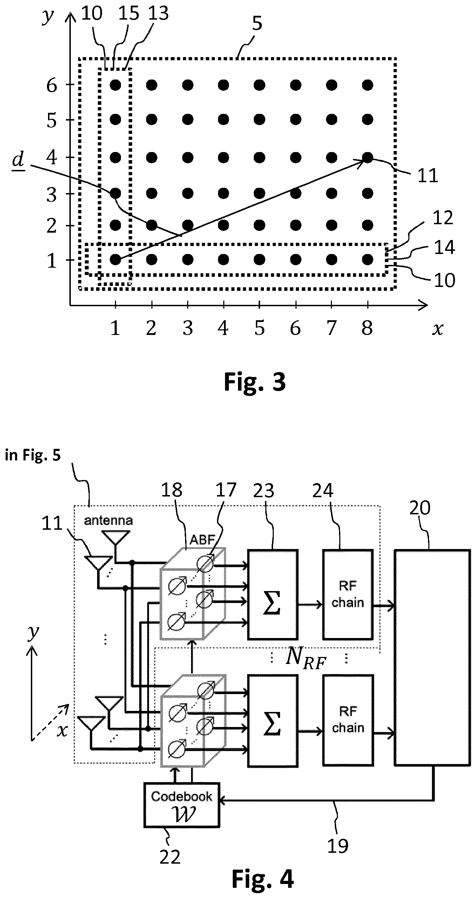

Figure 1 depicts a communication system 1, wherein a radio signal can be transmitted from a transmitter 2 to a receiver 3. The receiver 3 comprises a rectangular antenna array 5, which is shown in more detail in figures 2 and 3. The transmitter 2 comprises a transmit antenna 4, which is assumed to be a single antenna in this embodiment. Note that the disclosed method and system for determining a steering vector is described for a system where the transmitter uses one omni-directional antenna for radiation and the receiver employs an antenna array. That is, the communication system 1 is a SIMO system. However, the transmitter 2 may alternatively use a rectangular antenna array. In that case, the communication system 1 would be a MIMO system. The radio signal is assumed to be transmitted from the transmitter 2 in terms of a spherical electromagnetic wave formed by an omni-directional antenna. In one embodiment it is preferred that the electromagnetic wave has a wavelength in the millimetre wave range, such as 60GHz [Gigahertz].

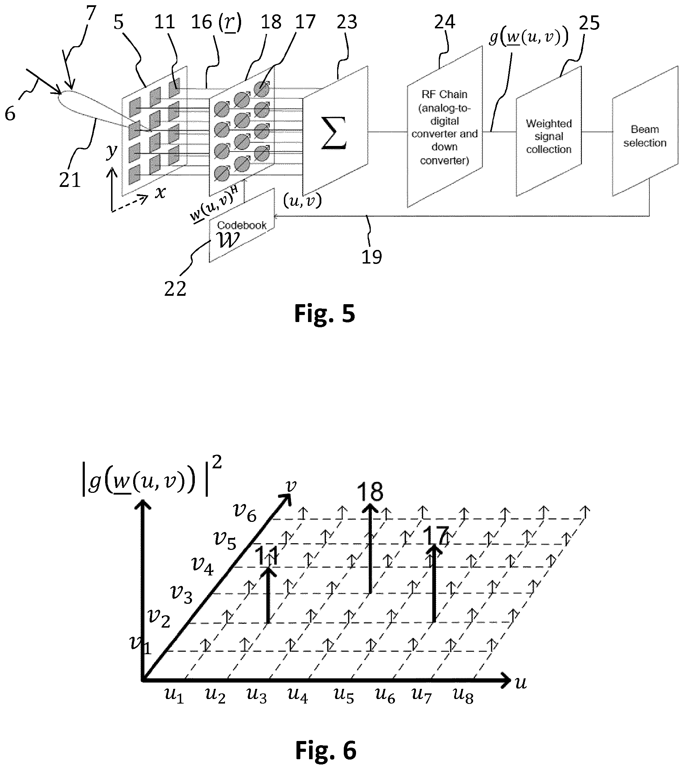

The rectangular antenna array 5 can be represented by a coordinate system comprising an x-and a y-axis shown in figure 3, which originates at the bottom left of the rectangular antenna array 5, and it is connected to a plurality of signal processing paths ($N_{RF}$ signal processing paths) 9 as indicated by dotted lines in figure 1. In this embodiment the antenna array is coupled to $N_{RF}$ = 3 signal processing paths 9. Note that in other embodiments of the invention the described method and system can be employed with any plurality of processing paths. Each signal processing path 9 is installed for (sequentially or simultaneously) processing analog signals received by the rectangular antenna array 5 in the passband. As illustrated in figures 4 and 5, each signal processing path 9 comprises an analog beamforming block 18, which in turn comprises a plurality of phase shifters 17, and an adder 23 for summing up all received phase-shifted signals and a radio frequency (RF) chain 24 comprising an analog-to-digital converter and a down converter for converting the output of adder 23 from passband to baseband.

The radio signal propagates from the transmitter 2 to the receiver 3 via a plurality of paths (P paths) 6, 7, where P = 2 is used in this embodiment. However, in reality any plurality of paths may occur, i.e., P > 2 more than two paths. In particular, if there are objects 8 such as buildings in the proximity of the propagating electromagnetic wave, reflections may occur and result in path diversity. Each path 6, 7 is assigned a path index p,p = 1, ...,P. The first path 6, labeled as p = 1, is assumed to be a straight line, i.e. a line of sight, between transmit antenna 4 and rectangular antenna array 5 at the receiver 3, whereas a second path 7, labeled as p = 2, comprises one reflection at an object 8. Each path 6, 7 is characterized by angles of incidence (which also may be referred to as angles of arrival, AoA) that comprise an azimuth angle of incidence $\phi_{A,p}$ and an elevation angle of incidence $\theta_{A,p}$. Therein, the subscript p indicates that the respective angles have individual values for each path. For better visibility, in this two-dimensional depiction in figure 1 the elevation angles of incidence $\theta_{A,p}$ for both paths 6, 7 are assumed to be zero and are not shown. That is, in figure 1 only the simplified case is shown that all paths 6, 7 lie in the same plane. In reality, the angles of incidence may be distributed in any three-dimensional way.

Figure 2 depicts the rectangular antenna array 5 of figure 1 in more detail. The definition of the azimuth angle of incidence $\phi_{A,p}$ and the elevation angle of incidence $\theta_{A,p}$ are illustrated for the incident wave of path 6 in a three dimensional coordinate system having a z-axis in addition to the x- and y-axes as previously introduced in figure 1.

In the following we assume an $N_X \times N_Y$ rectangular antenna array 5, where $N_X$ and $N_Y$ are the numbers of antenna indices in x- and *y*-directions, respectively. The superimposed received signal from paths 6 ($p$ = 1) and 7 ($p$ = 2) at the $N_X \cdot N_Y$ antenna elements can be shown as a vector r as

$$\underline{r} = s \cdot \sum_{p=1}^{P} \alpha_p \, \underline{a}\left(\phi_{A,p}, \theta_{A,p}\right) + \underline{z}, \tag{1}$$

where z of size $N_X N_Y \times 1$ is an AdditiveWhite Gaussian Noise (AWGN) vector, and s is the complex transmitted signal. Specifically, receive signal vector r can also be represented as

$$\underline{r} = \mathrm{vec}\left(\begin{bmatrix} r_{1,1} & \cdots & r_{1,N_Y} \\ \vdots & \ddots & \vdots \\ r_{N_X,1} & \cdots & r_{N_X,N_Y} \end{bmatrix}\right) = \begin{bmatrix} r_{1,1} \\ \vdots \\ r_{N_X,1} \\ \vdots \\ r_{1,N_Y} \\ \vdots \\ r_{N_X,N_Y} \end{bmatrix}, \tag{2}$$

where each entry is the received signal at the $(n_x, n_y)^{\text{th}}$ antenna element, and vec(x) denotes vectorization of matrix x. The contribution of each path is the original complex transmitted signal s coupling with the complex path loss coefficient $\alpha_p$ (distance-dependent) and then phase shifted by azimuth and elevation phase angles comprised in the $N_X N_Y \times 1$ array response vector $\underline{a}(\phi_{A,p}, \theta_{A,p})$, which comprises $N_X N_Y$ signals received by $N_X N_Y$ antennas of an $N_X \times N_Y$ rectangular antenna array.

Figure 3 depicts an antenna array 5 of receiver 3, wherein antennas 11 are arranged in a number $N_X$ of columns 13 and a number $N_y$ of rows 12. The total number of antennas 11 is $N_R = N_X \cdot N_Y$. Each antenna 11 is assigned a column index $n_x$ = 1, ... , $N_X$ and a row index $n_y$ = 1, ..., $N_Y$. In this embodiment it is $N_X$ = 8, $N_Y$ = 6 and, hence, $N_R$ = 48.

Two linear antenna arrays 10 within the rectangular antenna array 5 are highlighted by dotted lines in figure 3. There is a linear antenna array 14 parallel to the x-axis comprising the antennas 11 of one single row 12 of the rectangular antenna array 5 (in particular those with $n_y$ = 1), and there is one linear antenna array 15 parallel to the y -axis comprising the antennas 11 of one single column 13 of the rectangular antenna array 5 (in particular those with $n_x$ = 1). Note that any other row or column of antennas could be used as well. A position vector d originating at the antenna 11 with $n_x$ = 1 and $n_y$ = 1 is defined to be

$$\underline{d} = \begin{pmatrix} n_x - 1 \\ n_y - 1 \\ 0 \end{pmatrix} \Delta_d \tag{3}$$

and shown exemplarily for $n_x$ = 8 and $n_y$ = 4 in figure 3. $\Delta_d = \lambda_0/2$ is the distance between two adjacent columns and between two adjacent rows, and $\lambda_0$ is the wavelength at the carrier frequency. Preferably the distance between two adjacent columns as well as the distance between two adjacent rows of the antennas in the array is half of the wavelength. The rectangular antenna array 5 is preferably, but not necessarily, assumed to be a uniform array, i.e. the distance $\Delta_d$ between two neighboring linear antenna arrays in *x*- and *y*-directions are the same. For simplicity, this case is assumed in this description. Such a rectangular antenna array 5 can be referred to as a uniform rectangular array (URA). The respective uniform linear antenna arrays 10 can be referred to as uniform linear arrays (ULA).

The array response vector $\underline{a}(\phi_{A,p}, \theta_{A,p})$ by the rectangular antenna array 5 can be defined as

$$\underline{a}\left(\phi_{A,p},\theta_{A,p}\right) =$$

$$\frac{1}{\sqrt{N_X N_Y}}\begin{bmatrix} \exp\left( j\frac{2\pi}{\lambda_0}\cos\phi_{A,p}\sin\theta_{A,p}(0\ \Delta_d) + j\frac{2\pi}{\lambda_0}\sin\phi_{A,p}\sin\theta_{A,p}(0\ \Delta_d) \right) \\ \exp\left( j\frac{2\pi}{\lambda_0}\cos\phi_{A,p}\sin\theta_{A,p}(0\ \Delta_d) + j\frac{2\pi}{\lambda_0}\sin\phi_{A,p}\sin\theta_{A,p}(1\ \Delta_d) \right) \\ \vdots \\ \exp\left( j\frac{2\pi}{\lambda_0}\cos\phi_{A,p}\sin\theta_{A,p}((N_X-1)\Delta_d) + j\frac{2\pi}{\lambda_0}\sin\phi_{A,p}\sin\theta_{A,p}((N_Y-1)\Delta_d) \right) \end{bmatrix} \quad (4)$$

wherein *j* is the imaginary unit (also commonly labeled as i). The *array response vector* $\underline{a}$ may also be referred to as an *array propagation vector*.

To clearly introduce the idea, response vector $\underline{a}(\phi_{A,p},\theta_{A,p})$ is rewritten as the function of spatial frequency indices as

$$\underline{a}\left(\phi_{A,p},\theta_{A,p}\right) \equiv \underline{a}\left(k_p,l_p\right) = \frac{1}{\sqrt{N_X N_Y}}\begin{bmatrix} \exp\left( j2\pi k_p\cdot\frac{0}{N_X} + j2\pi l_p\cdot\frac{0}{N_Y} \right) \\ \exp\left( j2\pi k_p\cdot\frac{0}{N_X} + j2\pi l_p\cdot\frac{1}{N_Y} \right) \\ \vdots \\ \exp\left( j2\pi k_p\cdot\frac{(N_X-1)}{N_X} + j2\pi l_p\cdot\frac{(N_Y-1)}{N_Y} \right) \end{bmatrix} \quad (5)$$

where $k_p$ and $l_p$ are the normalized spatial frequencies in *x*- and *y*-axis respectively, shown as

$$k_p = \frac{\cos\phi_{A,p}\sin\theta_{A,p}}{\lambda_0}\cdot\frac{1}{\Delta_x} \quad (6)$$

and

$$l_p = \frac{\sin\phi_{A,p}\sin\theta_{A,p}}{\lambda_0}\cdot\frac{1}{\Delta_y}. \quad (7)$$

wherein $\Delta_x = (N_X\,\Delta_d)^{-1}$ and $\Delta_y = (N_Y\,\Delta_d)^{-1}$ are the normalization factors with respect to x and y axes. The normalized spatial frequency could also be referred to as a spatial frequency index. In general, the spatial frequency index is equivalent to the wave number up to a constant factor.

In the following, the method of beam selection (also known as steering vector selection) by a rectangular antenna array is described mathematically.

Figure 4 shows a diagram including one rectangular antenna array as depicted in figure 3. Each antenna of said rectangular antenna array 5 connects to one phase shifter 17, wherein the phase shifters may be arranged in any analog beamformer block 18. The phase shifters 17 in one analog beamformer (ABF) structure 18 are controlled by specific steering azimuth ($\phi_R$) and elevation ($\theta_R$) angles as

$$\underline{w}(\phi_R, \theta_R) =$$

$$\frac{1}{\sqrt{N_X N_Y}} \begin{bmatrix} \exp\left( j\frac{2\pi}{\lambda_0} \cos\phi_R \sin\theta_R (0 \; \Delta_d) + j\frac{2\pi}{\lambda_0} \sin\phi_R \sin\theta_R (0 \; \Delta_d) \right) \\ \exp\left( j\frac{2\pi}{\lambda_0} \cos\phi_R \sin\theta_R (0 \; \Delta_d) + j\frac{2\pi}{\lambda_0} \sin\phi_R \sin\theta_R (1 \; \Delta_d) \right) \\ \vdots \\ \exp\left( j\frac{2\pi}{\lambda_0} \cos\phi_R \sin\theta_R \big((N_X - 1)\Delta_d\big) + j\frac{2\pi}{\lambda_0} \sin\phi_R \sin\theta_R \big((N_Y - 1)\Delta_d\big) \right) \end{bmatrix} \quad (8)$$

$\underline{w}(\phi_R, \theta_R)$ is a steering vector with respect to the azimuth and elevation angles $(\phi_R, \theta_R)$, which represents the set of phase delays that a plane wave experiences at a set of array elements (antennas). One steering vector selected from the codebook $W$ (indicated by reference numeral 22), controls the entirety of the phase shifters 17 in analog beam former blocks 18.

In the following we define the steering spatial frequency indices with respect to x-axis *and* y-axis linear antenna array as

$$u \triangleq \frac{\cos\phi_R \sin\theta_R}{\lambda_0} \cdot \frac{1}{\Delta_x} \quad (9)$$

and

$$v \triangleq \frac{\sin\phi_R \sin\theta_R}{\lambda_0} \cdot \frac{1}{\Delta_y}. \quad (10)$$

Given that $N_U$ and $N_V$ are different spatial frequency indices with respect to an x-axis and y-axis linear antenna array, respectively, one has $u \in \{u_1, \dots, u_{N_U}\}$, $v \in \{v_1, \dots, v_{N_V}\}$.

According to equation (9) and (10), the *steering vector* as defined in equation (8) can also be shown as

$$\underline{w}(u, v) = \frac{1}{\sqrt{N_X N_Y}} \begin{bmatrix} \exp\left( j2\pi u \cdot \frac{0}{N_X} + j2\pi v \cdot \frac{0}{N_Y} \right) \\ \exp\left( j2\pi u \cdot \frac{0}{N_X} + j2\pi v \cdot \frac{1}{N_Y} \right) \\ \vdots \\ \exp\left( j2\pi u \cdot \frac{(N_x - 1)}{N_X} + j2\pi v \cdot \frac{(N_y - 1)}{N_Y} \right) \end{bmatrix} \quad (11)$$

The combinations of the spatial frequency indices are stored in the codebook 22.

A baseband signal processing control unit 20 is included in figure 4. The baseband signal control unit 20 is connected to the radio frequency chains 24 for jointly processing the signals output by the radio frequency chains 24. Further, the signal control unit 20 is connected to the codebook 22 by connection 19 for controlling codebook 22.

A steering vector $w(u, v)$ controls the phase shift 17 of the analog beamformer blocks 18 when applied to the beamformer blocks 18. In the given codebook 22, there are $N_U \cdot N_V$ steering vectors associated with different $N_U \cdot N_V$ combinations of spatial frequency indices shown as $W = \{w(u_1, v_1), w(u_1, v_2), \dots, w(u_{N_U}, v_{N_V})\}$.

Typically, the number $N_U \cdot N_V$ of the elements in the codebook $W$ is larger than the number $N_{RF}$ of signal processing paths 9. Consequently, not all of the steering vectors comprised in codebook 22 can be applied to the signal processing paths at the same time (if there is more than one analog beamforming block 18, more than one steering vector $\underline{w}(u, v)$ can be processed at the same time). Instead, the system must iteratively train, i.e. test, all the steering vectors comprised in the codebook before the most promising steering vector can be selected; this procedure is called codebook training. In order to optimize signal reception, the steering vector yielding the highest magnitude of the received signal shall be selected for data transmission and/or reception. Accordingly, during the period of codebook training, we assume that the coherence time is sufficiently long to finish the procedure by at most $N_{RF}$ signal processing paths.

The received signal r (indicated by reference numeral 16) after processing in one signal processing path, including 18, 23, 24, can be represented as

$$g\left(\underline{w}(u,v)\right) = \underline{w}(u,v)^H \underline{r}, \tag{12}$$

wherein $(\cdot)^H$ (i.e. the superscript $H$) denotes the Hermitian conjugate of a matrix.

Figure 5 shows a detailed sketch with respect to one analog beamformer block 18 in figure 4, wherein one rectangular antenna array 5 and one analog beamformer block 18 are shown. A beam 21 formed by the given steering vector $\underline{w}(u, v)$ is shown. The receive signal $r_{n_x,n_y}$ (indicated by reference numeral 16) at the $(n_x, n_y)^{th}$ antenna 11 is phase-shifted by a phase shifter 17. After analog beamforming in analog beamforming block 18, the sum of all the weighted receive signals 23 with respect to the steering vector $\underline{w}(u, v)$ at baseband (after down converter) can be represented as

$$g\left(\underline{w}(u,v)\right) = s \cdot \sum_{p=1}^{P} \alpha_p \underline{w}(u,v)^H \underline{a}\left(k_p, l_p\right) + \underline{w}(u,v)^H \underline{z}, \tag{13}$$

After collecting the weighted received signals associated with all the steering vectors in 25, the optimal beams can be selected according to some criterions (such as the received signal magnitude) as

$$(\tilde{u}, \tilde{v}) = \underset{w(u,v)\in\mathcal{W}}{arg\ max} \left|g\left(\underline{w}(u,v)\right)\right| \tag{14}$$

where $|g(\underline{w}(u,v))|$ is the received signal magnitude by the rectangular antenna array with respect to the $(u,v)^{th}$ steering vector, and $(\tilde{u},\tilde{v})$ is the pair of the selected steering vector indices.

Note that the received radio signal is filtered in the receive chains by each steering vector comprised in the codebook, i.e. there is a processing loop for iteratively training all steering vectors comprised in the codebook. Hence, in one iteration, the steering vector is applied to the receive chains and the received first radio signal is filtered in the receive chains. If there is more than one analog beamforming block, more than one steering vector can be applied simultaneously as shown in figure 4. The time required for applying all steering vectors is reduced accordingly. That is, if there are, e. g., five analog beamformer blocks, five steering vectors can be applied in each iteration step.

Figure 6 illustrates the results of an exemplary numerical calculation by orthogonal steering vectors, wherein we assume that all the steering vectors in the codebook $W$ are orthogonal.

Note that the proposed method is not limited to orthogonal steering vectors; this assumption makes the description of the proposed method simpler. By the rectangular antenna array from figures 3 with $N_X = 8$, $N_Y = 6$, the number of spatial frequency indices $N_U = 8$, $N_V = 6$ ($N_U$ and $N_V$ may not be equal to $N_X$ and $N_Y$ respectively), and the number of sparse channel paths $P = 3$, three significantly large values of the received rectangular antenna array signal magnitude $|g(\underline{w}(u,v))|$ are shown (with exemplary values of 11, 17 and 18), while others can be regarded as noise term. The weighted rectangular array signal magnitude $|g(\underline{w}(u,v))|$ can be considered as sparse signal, i.e. only a few elements have a significantly large value. According to the magnitude values, $N_{RF}$ ($N_{RF} = 3$) pairs of spatial frequency indices are selected for data transmission, denoted by $\{(\tilde{u}, \tilde{v})\} = \{(u_2, v_2), (u_4, v_3), (u_6, v_2)\}$.

The exhaustive beam searching time scales with $N_U \cdot N_V$, and the computational complexity of multiplication scales with $N_X N_U N_Y N_V$ due to the fact that a rectangular array of size $N_X \times N_Y$ is used for each beam forming.

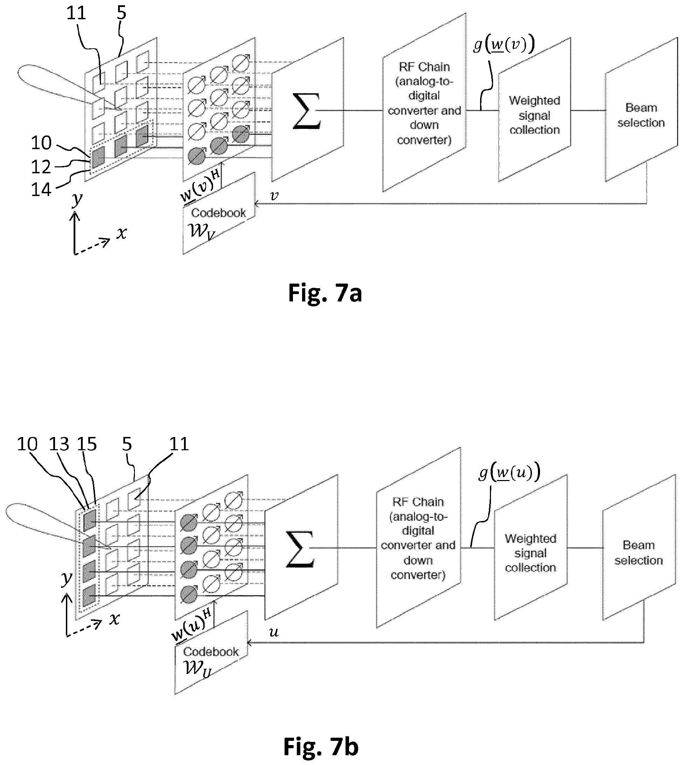

Figure 7a depicts a first embodiment of an arrangement for determining the most promising steering vector(s), wherein only a linear antenna array 10 in x-axis with $n_y = 1$ of the rectangular antenna array 5 is taken into account to receive signals. Hence, the $N_X \times 1$ received linear antenna array signal vector $\underline{r}$ from $P$ channel paths is

$$\underline{r} = s \cdot \sum_{p=1}^{P} \alpha_p \underline{a}\left(k_p\right) + \underline{z}, \tag{15}$$

where

$$\underline{r} = \begin{bmatrix} r_{1,1} \\ \vdots \\ r_{n_x-1,1} \\ \vdots \\ r_{N_X,1} \end{bmatrix}. \qquad (16)$$

$\underline{z}$ is an $N_X \times 1$ noise vector that comprises noise received by the antenna in the *x*-axis (wherein, as only a linear antenna array 10 with $n_y = 1$ is taken into account). In order to simplify the notation, the received linear antenna array signal and noise vectors are also shown as $\underline{r}$ and $\underline{z}$ as those in equation (1). $\alpha_p$ is a path loss factor of the *p*-th path, i.e. the fraction of the initial signal strength s that can be received via the p-th path. The $N_X \times 1$ array response vector $\underline{a}(k_p)$ is shown as

$$\underline{a}(k_p) = \begin{bmatrix} \exp\left( j2\pi k_p \cdot \frac{0}{N_X} \right) \\ \exp\left( j2\pi k_p \cdot \frac{1}{N_X} \right) \\ \vdots \\ \exp\left( j2\pi k_p \cdot \frac{(N_X-1)}{N_X} \right) \end{bmatrix}. \qquad (17)$$

By manipulating the preferred steering angles, we can control the phase shifters 17 coupled to each receive antenna individually, see figure 7a.

Note that $n_y$ may not be equal to one; instead any arbitrary row of the rectangular array 5 can be used. If $n_y \neq 1$, then there is an additional phase term with respect to $n_y$ which applies to all the received signals in the $n_y$-th row 12. Either $n_y = 1$ or $n_y \neq 1$, the results of the selection of the steering vector based on the received linear antenna array signal magnitude is the same. The assumption of $n_y = 1$ in the example is to make the description simpler.

Given $n_y = 1$, the steering vector (11) can be simplified as

$$\underline{w}(u) = \begin{bmatrix} \exp\left( j2\pi u \cdot \frac{0}{N_X} \right) \\ \exp\left( j2\pi u \cdot \frac{1}{N_X} \right) \\ \vdots \\ \exp\left( j2\pi u \cdot \frac{(N_X-1)}{N_X} \right) \end{bmatrix}. \qquad (18)$$

The weighted *u*-signal $g(w(u))$, $u = u_1, \dots, u_{N_U}$, after analog beamforming, i.e. after being phase shifted by phase shifters 17 configured by an applied steering vector $\underline{w}(u)$, is given by

$$g(\underline{w}(u)) = s \cdot \sum_{p=1}^{P} \alpha_p \underline{w}(u)^H \underline{a}(k_p) + \underline{w}(u)^H \underline{z}. \qquad (19)$$

The optimal beam is selected according to the received signal magnitude

$$\hat{u} = \arg\max_{w(u) \in \mathcal{W}_U} |g(w(u))|. \qquad (20)$$

where $w(u) \in W_U = \{\underline{w}(u_1), \dots, \underline{w}(u_{N_U})\}$ is the sub-codebook element of the sub-codebook $W_U$, which is applied to the analog beamformer block 18 and in this way is applied to the received signal. $\hat{u}$ is the selected steering spatial frequency index with respect to the x-axis linear antenna array. Note that the difference between the notations $\hat{u}$ and $\tilde{u}$ in equation (14) is that $\hat{u}$ is the intermediate steering vector selection result while $\tilde{u}$ is the final result used for data transmission.

The sub-codebook contains the same elements as the (overall) codebook, except that $n_y$ is set to a fixed value. That is, the sub-codebook contains the steering vectors that are relevant to be used for a linear antenna array. Note that we assume the coherent time as sufficiently long to finish the codebook training procedure. After all sub-codebook elements of the sub-codebook have been trained, i.e. all sub-codebook elements have been trained, i.e. tested, in a loop and the signal amplitudes have been calculated after one analog beamforming, then the sub-codebook element yielding the highest amplitude is selected as the one for data transmission.

The same procedure can be applied to the cases of $n_x$ = 1 (or equal to any constant value), see figure 7b, the weighted $v$-signal $g(v)$, $v = v_1, ..., v_{N_V}$, after one analog beamforming is shown as

$$g(\underline{w}(v)) = s \cdot \sum_{p=1}^{P} \alpha_p \underline{w}(v)^H \underline{a}(l_p) + \underline{w}(v)^H \underline{z} \qquad (21)$$

and

$$\hat{v} = \arg \max_{w(v) \in \mathcal{W}_V} \left| g(\underline{w}(v)) \right|^2 \qquad (22)$$

where $W_V = \{\underline{w}(v_1), ..., \underline{w}(v_{N_V})\}$ is the sub-codebook and $\hat{v}$ is the selected steering spatial frequency index with respect to the $y$-axis linear antenna array.

After having selected the optimal elements of the sub-codebooks $W_U$ and $W_V$, the optimal element(s) of the overall codebook $W$ used for data transmission can be identified by using the selected elements of the sub-codebooks $W_U$ and $W_V$. That is, with the linear antenna arrays, $\hat{u}$ and $\hat{v}$ are identified as the optimal. Putting $\hat{u}$ and $\hat{v}$ as $u$ and $v$ into equation (11) will yield the optimal steering vector comprising information on the optimal phase shift for all antennas in the (rectangular) array.

In the following, three embodiments of the described method for steering vector selection are presented. Thereby, the communication system of figure 1, and in particular the rectangular antenna array 5 of figure 3, is considered.

The first embodiment of the beam selection method is visualized in figures 7 to 11. In figure 7a, each antenna 11 of the rectangular antenna array 5 receives a respective receive signal $r_{n_x,n_y}$.

However, the method for selecting the most promising steering vector is not simply based on applying a respective steering vector, which is selected from the complete codebook, to the analog beamformer block 18 (i.e., applies the respective phase shifters to the signal received at all the antennas 11 of antenna array 5) in every iteration. Instead, only a subset of the receive signals is considered, i.e. receive signals by only one row or one column of the antenna array. Considering the receive signals of linear arrays only reduces significantly the computational effort.

To determine the most promising steering vector, the weighted $u$-signals are calculated for one single row 12, i.e. for the $x$-axis linear antenna array 14, the number $N_U$ of weighted $u$-signals $g(\underline{w}(u))$, $u = u_1, ..., u_{N_U}$ is calculated according to equation (19). Each weighted signal $g(w(u))$ reflects all receive signals of one single row 12. Analogously, in figure 7b, for one single column 13, i.e. for the $y$-axis linear antenna array 15, the number $N_V$ of weighted $v$-signals $g(\underline{w}(v))$, $v = v_1, ..., v_{N_V}$ is calculated according to equation (21). Each weighted signal $g(\underline{w}(v))$ reflects all receive signals at one single column 13.

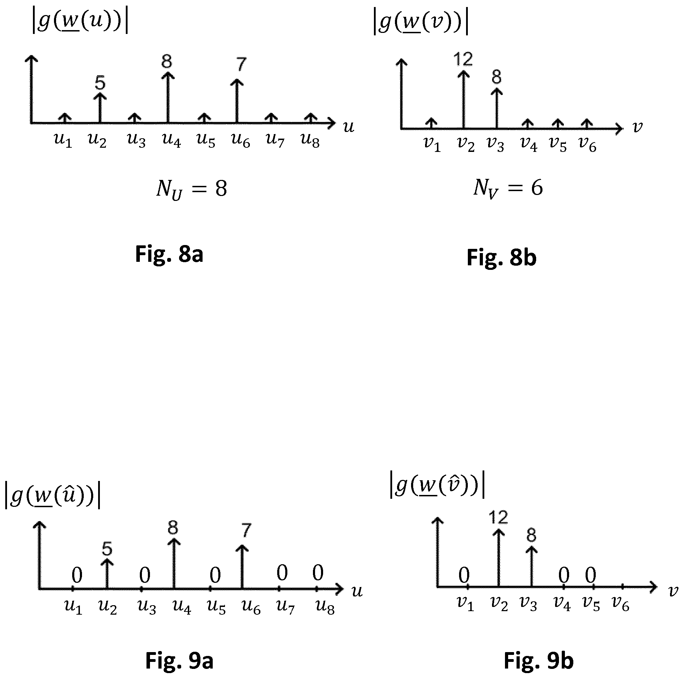

Figures 8a and 8b show the magnitudes of the calculated weighted $u$-axis array signal magnitude $|g(\underline{w}(u))|$ with $N_U$ = 8 and the calculated weighted $v$-axis array signal magnitude $|g(\underline{w}(v))|$ with $N_V$ = 6.

From the weighted u-axis array signals $\{|g(\underline{w}(u))|^2\}$, a number of $N_U' \ (N_U' < N_U)$ signals having the highest received signal magnitude values are selected, which are referred to as selected weighted u-axis array signals $|g(\underline{w}(\hat{u}))|^2$.

Analogously, from the weighted $v$-axis array signals $\{|g(\underline{w}(v))|^2\}$, $N_V' \ (N_V' < N_V)$ signals having the highest received signal magnitude values are selected, which are referred to as selected weighted $v$-axis array signals $|g(\underline{w}(\hat{v}))|^2$. Figure 9a shows $N_U' \ (\text{assume } N_U' = 3)$ received signal magnitude values of the selected weighted $u$-axis array signals and figure 9b shows $N_V' \ (\text{assume } N_V' = 2)$ received signal magnitude values of the selected weighted $v$-axis array signals, i.e. with $N_V' = 2$ $\hat{v}_1 = v_2$ and $\hat{v}_2 = v_3$ and with $N_U' = 3$ the values $\hat{u}_1 = u_2$ and $\hat{u}_2 = u_4$ and $\hat{u}_3 = u_6$ are selected.

The $N_U'$ selected weighted u-axis array signals $|g(\underline{w}(\hat{u}))|$ and the $N_V'$ selected weighted $v$-axis array signals $|g(\underline{w}(\hat{v}))|$ are combined thus producing weighted signals products $C(\underline{w}(\hat{u}, \hat{v})) = |g(\underline{w}(\hat{u}))| \cdot |g(\underline{w}(\hat{v}))|$. Therein, each weighted signals product $C(\underline{w}(\hat{u}, \hat{v}))$ is a product of the magnitude of the respective selected weighted u-axis array signal $|g(\underline{w}(\hat{u}))|$

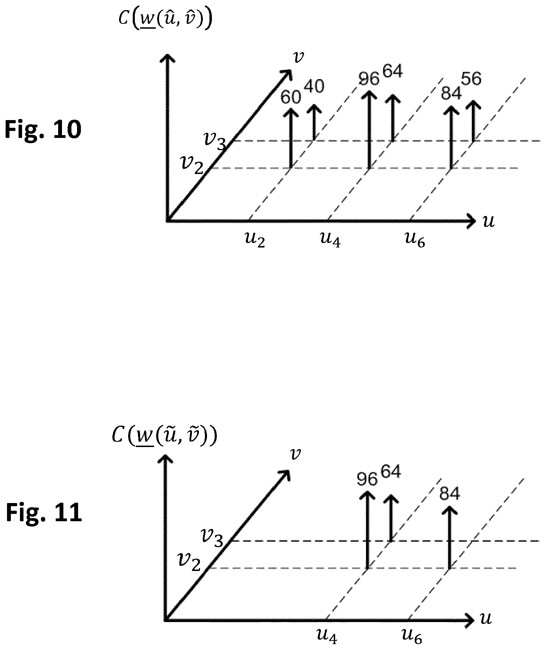

and the magnitude of the respective selected weighted *v*-axis array signal $|g(\underline{w}(\hat{v}))|$. The weighted signals products $C(\hat{u}, \hat{v})$ are illustrated in figure 10.

From the number $N_U' \cdot N_V'$ of products, the number $N_{RF}$ $(N_{RF} \leq N_U' \cdot N_V')$ of the products having the largest value are selected as a subset. These selected $N_{RF}$ largest values are referred to as the final selected weighted signal products $C(\tilde{u}, \tilde{v})$, where $\tilde{u} \in \{\hat{u}_1, \ldots, \hat{u}_{N_U'}\}$ and $\tilde{v} \in \{\hat{v}_1, \ldots, \hat{v}_{N_V'}\}$, and the corresponding spatial frequency indices are applied to the analog beamformer block 18.

Figure 11 shows the final selected weighted signal products $C(\tilde{u}, \tilde{v})$, wherein $N_{RF} = 3$ was used in this embodiment wherein $\tilde{u}_1 = u_4$, $\tilde{u}_2 = u_6$, $\tilde{u}_3 = u_4$ and $v_1 = v_2$, $\tilde{v}_2 = v_2$, $\tilde{v}_3 = u_3$. Note that the number of the final selected weighted signal products $C(\tilde{u}, \tilde{v})$ is supposed to be equal the number of available signal processing paths $N_{RF}$.

Subsequently, the selected $N_{RF}$ pair of spatial frequency indices $\{(\tilde{u}_1, \tilde{v}_1), \ldots, (u_{N_{RF}}, v_{N_{RF}})\}$, are used in $N_{RF}$ steering vectors parallel, i.e. as an analog beamforming matrix, for data transmission. In the given example, if $N_{RF} = 3$, the following values are used $(\tilde{u}_1, \tilde{v}_1) = (u_4, v_2)$, $(\tilde{u}_2, \tilde{v}_2) = (u_6, v_2)$, $(\tilde{u}_3, \tilde{v}_3) = (u_4, v_3)$.

In the described embodiment the steering vector selection time scales with $N_U + N_V$. This is due to the fact that the number $N_U$ of steering vectors and the number $N_V$ of steering vectors are used sequentially. In addition, the computational complexity of multiplication scales with $N_X N_U + N_Y N_V + N_u' N_y$. This is due to the fact that the number $N_U$ of weighted u-axis array signals is obtained by a $N_X \times 1$ ULA, the number $N_V$ of weighted v-axis array signals is calculated by a $N_Y \times 1$ ULA, and the number $N_U' \cdot N_V'$ of the combinations is calculated. All other computation steps do not contribute significantly.

A refined embodiment of the steering vector selection method comprises all steps as described above for the rectangular antenna array. In addition to these steps the selected spatial frequency index pairs are used to further enhance the results. Figures 8a, 8b, 9a, 9b, 12, and 13 illustrate the second preferred embodiment.

As illustrated in figures 9a and 9b, the $N_U' \cdot N_V'$ pairs of spatial frequency indices $\{(\hat{u}_1, \hat{v}_1), (\hat{u}_1, \hat{v}_2), \ldots, (\hat{u}_{N_U'}, \hat{v}_{N_V'})\}$ are selected to recalculate received signals by rectangular antenna array signal, which is different to the first embodiment, as

$$g\big(\underline{w}(\hat{u}, \hat{v})\big) = s \cdot \sum_{p=1}^{P} \alpha_p \underline{w}(\hat{u}, \hat{v})^H \, \underline{a}(k_p, l_p) + \underline{w}(\hat{u}, \hat{v})^H \underline{z}, \qquad (26)$$

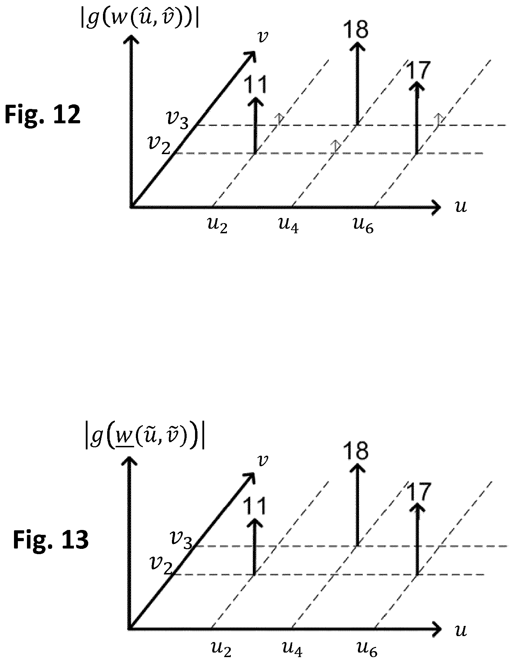

and the signal magnitude = $|g(w(\hat{u}, \hat{v}))|$ is shown in figure 12. Then, $N_{RF}$ pairs of spatial frequency indices having the largest signal magnitude values are selected as shown in figure 13 *with* $N_{RF} = 3$, which are referred to as $(\tilde{u}_1, \tilde{v}_1) = (u_4, v_3)$, $(\tilde{u}_2, \tilde{v}_2) = (u_6, v_2)$, $(\tilde{u}_3, \tilde{v}_3) = (u_2, v_2)$. These $N_{RF}$ resulting combinations $\{(\tilde{u}_1, \tilde{v}_1), (\tilde{u}_2, \tilde{v}_2), (\tilde{u}_3, \tilde{v}_3)\}$ are used for data transmission.

In the second preferred embodiment the beam searching time scales with $N_U + N_V + N_U' N_V'$.

The first two parts ($N_U$ and $N_V$) are the same as the first preferred embodiment, and the third part $N_U' N_V'$ is due to the codebook training by URA with $N_U' N_V'$ intermediate selected steering vectors. In addition, the computational complexity of multiplication scales with $N_X N_U +$ $N_Y N_V + N_X N_Y N_U' N_V'$.

A further refined embodiment of the beam selection methods is illustrated in figures 8a, 9a (or 8b, 9b), 14, and 15. Similar to the first and the second preferred embodiments, the selected spatial frequency indices $\{\hat{u}_1, \ldots, \hat{u}_{N_U'}\}$ (or $\{\hat{v}_1, \ldots, \hat{v}_{N_V'}\}$ are reserved as shown in figures 9a (or 9b). In this embodiment, either *u*-axis or *v*-axis array signals = $|g(w(u))|$ or $|g(w(v))|$) are calculated.

Subsequently, the weighted rectangular antenna array signal magnitude values $\{|g(\hat{u}, v)|\}$, $\hat{u} = \hat{u}_1, \ldots, \hat{u}_{N_U'}$,

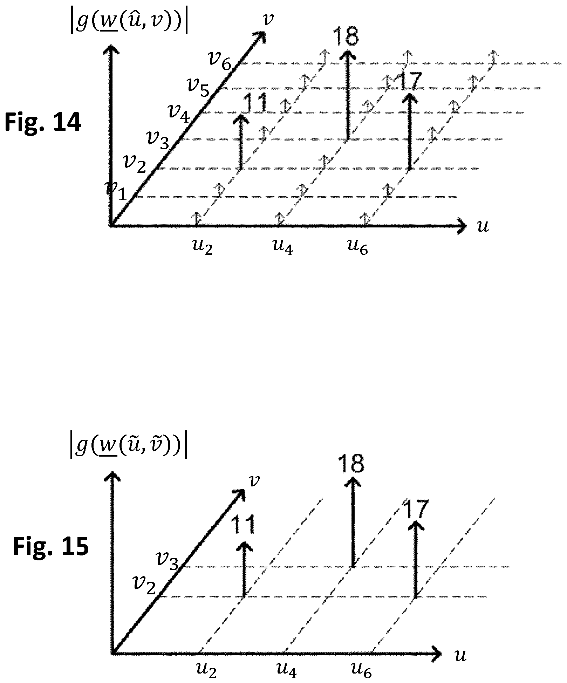

$v = v_1, ..., v_{N_V}$}, (or $g(u, \hat{v})$, $u = u_1, ..., u_{N_U}$, $\hat{v} = \hat{v}_1, ..., \hat{v}_{N_V'}$ ) are calculated for the combination based on the selected indices. For example, if $u$-signals are taken into account, as shown in figure 9a, $\hat{u} = u_2, u_4, u_6$, then, the combinations of $\hat{u}$ and $v$ are considered in codebook 22 and the resulting received signal magnitude is shown in figure 14. Then, $N_{RF}$ pairs of spatial frequency indices having the largest signal magnitude values are selected as shown in figure 15 with $N_{RF} = 3$ , which are referred to as $(\tilde{u}_1, \tilde{v}_1) =$

$(u_4, v_3)$, $(\tilde{u}_2, \tilde{v}_2) = (u_6, v_2)$, $(\tilde{u}_3, \tilde{v}_3) = (u_2, v_2)$ . These $N_{RF}$ resulting combinations {$(\tilde{u}_1, \tilde{v}_1)$, $(u_2, \tilde{v}_2)$, $(\tilde{u}_3, \tilde{v}_3)$} are used for data transmission.

In the third preferred embodiment the beam searching time scales with $N_U + N_U' N_V$ (or $N_V + N_V' N_U$ ).

The first part $N_U$ (or $N_V$) is the same as the first preferred embodiment, and the second part $N_U' N_V$ or $(N_V' N_U)$ is due to the beam training by URA with $N_U' N_V$ or $N_V' N_U$ combinations of the steering vectors. In addition, the computational complexity of multiplication scales with $N_X N_U + N_X N_Y N_U' N_V$ (or $N_Y N_V + N_X N_Y N_V' N_U$ ).

**Claims**

1.  Method for steering vector selection in a receiver (3) for receiving a radio signal, the receiver (3) comprising at least

    - a number, $N_R$, of antennas (11) arranged in a two-dimensional antenna array (5) having a number, $N_X$, of columns (13) and a number, $N_Y$, of rows (12), wherein $n_x$ is a column index $n_x = 1, ..., N_X$ and $n_y$ is a row index $n_y = 1, ..., N_y$ ; and
    - a number, $N_{RF}$, of signal processing paths (9) for processing a multitude of receive signals $r_{n_x, n_y}$, wherein $N_{RF} < N_R$,

    the method comprising at least the following steps:

    A) receiving a receive signal $r_{n_x,n_y}$ at each respective antenna (11);
    B) for one single row (12) of the two-dimensional antenna array (5), determining a number, $N_U$, of weighted $u$-axis array signals $g(\underline{w}(u))$, each weighted $u$-axis array signal $g(\underline{w}(u))$ reflecting all receive signals $r_{n_x,n_y}$ of the said one single row (12) processed by a steering vector $\underline{w}(u)$, wherein $u = 1, ..., N_U$ is an index for the steering vector $\underline{w}(u)$;

    C) selecting a number of $N_U' < N_U$ $N_U$ weighted $u$-axis array signals $g(\underline{w}(u))$, the said $N_U'$ selected weighted $u$-axis array signals $g(\underline{w}(\hat{u}))$ having the $N_U'$ largest values of $|g(\underline{w}(u))|$; and
    D) based on the selected weighted $u$-axis array signals $g(\underline{w}(\hat{u}))$, determining at least a number, $N_{RF}$, of steering vectors $\underline{w}(\tilde{u}, \tilde{v})$ for data transmission, each steering vector indexed by a pair of spatial frequency indices $(\tilde{u}, \tilde{v})$.

2.  Method according to one of the preceding claims, wherein in step D) weighted rectangular array signals $g(\underline{w}(\tilde{u}, \tilde{v}))$ are determined as sums of the receive signals $r_{n_x,n_y}$, whose phase is shifted by a phase of $2\pi \left( \frac{n_x \tilde{u}}{N_X} + \frac{n_y \tilde{v}}{N_Y} \right)$, at all the antennas (11) of the rectangular antenna array (5).

3.  Method according to one of the preceding claims, wherein in step B) the weighted u-axis array signals $g(\underline{w}(u))$ are determined as sums of the receive signals $r_{n_x,n_y}$, whose phase is shifted by a phase of $2\pi n_x u / N_X$, at all antennas (11) of the said one single row (12).

4.  Method according to one of the preceding claims, further comprising the following steps:

    B1) for one single column (13) of the two-dimensional rectangular antenna array (5), determining a number, $N_V$, of weighted $v$-axis array signals $g(\underline{w}(v))$, each weighted $v$-axis array signal $g(\underline{w}(v))$ reflecting all receive signals $r_{nx,ny}$ of the said one single column (13) processed by a steering vector $\underline{w}(v)$, wherein $v = 1, ... , N_V$ is the index for the steering vector $\underline{w}(v)$; and

C1) selecting a number of $N'_V < N_V$ weighted v-axis array signals $g(\underline{w}(v))$, the said $N'_V$ selected weighted v-axis array signals $g(\underline{w}(\hat{v}))$ having the $N'_V$ largest values of $|g(\underline{w}(v))|$.

5. Method according to claim 4, wherein in step B1) the weighted v-axis array signals $g(\underline{w}(v))$ are determined as sums of the receive signals $r_{nx,ny}$, whose phase is shifted by a phase of $2\pi n_y v/N_Y$, at all antennas (11) of said single column (13).

6. Method according to one of claims 4 to 5, further comprising the following steps:

a) combining the selected weighted u-axis array signals $g(\underline{w}(\hat{u}))$ and the selected weighted v-axis array signals $g(\underline{w}(\hat{v}))$ leading to weighted signals products $C(\underline{w}(\hat{u},\hat{v}))$, wherein each weighted signals product $C(\underline{w}(\hat{u}, \hat{v}))$ is a product of the magnitude of the respective selected weighted u-axis array signal $|g(\underline{w}(\hat{u}))|$ and the magnitude of the respective selected weighted v-axis array signal $|g(\underline{w}(\hat{v}))|$; and

b) selecting a number $N_{RF} < N'_U \cdot N'_V$ of weighted signals products $C(\underline{w}(\hat{u}, \hat{v}_2))$, the said $N_{RF}$ selected weighted signals products $C(\underline{w}(\tilde{u}, \hat{v}))$ having the $N_{RF}$ largest values of $C(\underline{w}(\tilde{u}, \hat{v}_2))$,

wherein in step D) the $N_{RF}$ steering vectors for data transmission are the ones with respect to the $N_{RF}$ selected weighted signals product $C(\underline{w}(\tilde{u}, \tilde{v}_2))$.

7. Method according to claim 6, wherein a computation time is proportional to $N_V + N_U$, and wherein a computational complexity is proportional to $N_X N_U + N_Y N_V + N'_U N'_V.$

8. Method according to one of claims 4 to 5, wherein the method further comprises:

i) calculating a weighted rectangular array signal $g(\underline{w}(\hat{u},\hat{v}))$ for each combination of indices $\hat{u}$ and $\hat{v}$, wherein $\hat{u}$ and $\hat{u}$ are the selected spatial frequency indices with respect to the largest $N'_U$ and $N'_V$ magnitude of $|g(\underline{w}(u))|$ and $|g(\underline{w}(v))|$ I respectively, and

ii) selecting a number of $N_{RF}$ results from the calculated magnitude of the weighted rectangular array signals $|g(\underline{w}(\hat{u}, \hat{v}))|$, the said $N_{RF}$ selected magnitude of the weighted rectangular array signals $|g(\underline{w}(\tilde{u}, \tilde{v}))|$ having the $N_{RF}$ largest values of $|g(\underline{w}(\hat{u}, \hat{v}))|$, wherein in step D) the $N_{RF}$ steering vectors for data transmission are the ones with respect to the $N_{RF}$ selected magnitudes of the weighted signals products $|g(\underline{w}(\tilde{u}, \hat{v}))|$.

9. Method according to claim 8, wherein a computation time is proportional to $N_U + N_V + N'_U N'_V$, and the computational complexity is proportional to $N_X N_U + N_Y N_V + N_X N_Y N'_U N'_V.$

10. Method according to one of the claims 1 to 3, wherein in step D) a weighted rectangular array signal $|g(\underline{w}(\tilde{u}, v))|$ is calculated for each index $\hat{u}$, wherein $\hat{u}$ is the selected spatial frequency index with respect to the $N'_U$ largest magnitude of $= |g(\underline{w}(u))|$.

11. Method according to claim 10, wherein the method further comprises selecting a number of $N_{RF}$ results from the calculated weighted rectangular array signals $|g(\underline{w}(\hat{u}, v))|$, the said $N_{RF}$ selected weighted rectangular array signals $|g(\underline{w}(\tilde{u}, \tilde{v}))|$ having the $N_{RF}$ largest values of $|g(\underline{w}(\tilde{u}, v))|$, wherein in step D) the $N_{RF}$ steering vectors for data transmission are the ones with respect to the $N_{RF}$ selected magnitudes of the weighted signals $= |g(\underline{w}(\tilde{u}, \hat{v}))|$.

12. Method according to claim 11, wherein a computation time is proportional to $N_U + N'_U N_V$, and the computational complexity is proportional to $N_X N_U + N_X N_Y N'_U N_V.$

**13.** Method according to any preceding claim wherein the steering vectors are orthogonal to each other.

**14.** Method according to any preceding claim, wherein the radio signal is an electromagnetic wave exhibiting a frequency above 6 GHz.

**15.** Receiver (3) for receiving a radio signal comprising at least

- a number, $N_R$, of antennas (11) arranged in a two-dimensional antenna array (5) having a number, $N_X$, of columns (13) and a number, $N_Y$, of rows (12), wherein $n_x$ is a column index $n_x$ = 1, ..., $N_X$ and $n_y$ is a row index $n_y$ = 1, ..., $N_y$ ; and
- a number, $N_{RF}$, of signal processing paths (9) for processing a multitude of receive signals $r_{nx,ny}$, wherein $N_{RF} < N_R$,

wherein the signal processing paths (9) of the receiver are configured for

A) receiving a receive signal $r_{nx,ny}$ at each respective antenna (11);
B) for one single row (12) of the two-dimensional antenna array (5), determining a number, $N_U$, of weighted u-axis array signals $g(\underline{w}(u))$, each weighted u-axis array signal $g(\underline{w}(u))$ reflecting all receive signals $r_{nx,ny}$ of the said one single row (12) processed by a steering vector $\underline{w}(u)$, wherein u = 1, ..., $N_U$ is an index for the steering vector $\underline{w}(u)$;

C) selecting a number $N_U' < N_U$ of weighted u-axis array signals $g(\underline{w}(u))$, the said $N_U'$ selected weighted u-axis array signals $g(\underline{w}(\hat{u}))$ having the $N_U'$ largest values of $|g(\underline{w}(u))|$; and
D) based on the selected weighted u-axis array signals $g(\underline{w}(u))$, determining at least a number of steering vectors $\underline{w}(\hat{u}, \tilde{v})$ for data transmission, each steering vector indexed by spatial frequency indices $(\hat{u}, \tilde{v})$.

**16.** The receiver of claim 15, wherein in step D) weighted rectangular array signals $g(\underline{w}(\tilde{u}, \tilde{v}))$ are determined as sums of the receive signals $r_{nx,ny}$, whose phase is shifted by a phase of $2\pi \left( \frac{n_x \tilde{u}}{N_X} + \frac{n_y \tilde{v}}{N_Y} \right),$ at all the antennas (11) of the rectangular antenna array (5).

**17.** The receiver (3) of any preceding claim 15-16, wherein in step B) the weighted u-axis array signals $g(\underline{w}(u))$ are determined as sums of the receive signals $r_{nx,ny}$, whose phase is shifted by a phase of $2\pi n_x u/N_X$, at all antennas (11) of the said one single row (12).

**18.** The receiver (3) of any preceding claim 17, wherein the signal processing paths (9) are furthermore configured to perform the steps of

B1) for one single column (13) of the two-dimensional rectangular antenna array (5), determining a number, $N_V$, of weighted v-axis array signals $g(\underline{w}(v))$, each weighted v-axis array signal $g(\underline{w}(v))$ reflecting all receive signals $r_{nx,ny}$ of the said one single column (13) processed by a steering vector $\underline{w}(v)$, wherein v = 1,..., $N_V$ is the index for the steering vector $\underline{w}(v)$; and

C1) selecting a number of $N_V' < N_V$ $N_V$ weighted v-axis array signals $g(\underline{w}(v))$, the said $N_V'$ selected weighted v-axis array signals $g(\underline{w}(\hat{v}))$ having the $N_V'$ largest values of $|g(\underline{w}(v))|$ .

**19.** The receiver (3) of claim 18, wherein in step B1) the weighted v-axis array signals $g(\underline{w}(v))$ are determined as sums of the receive signals $r_{nx,ny}$, whose phase is shifted by a phase of $2\pi n_y v/N_Y$, at all antennas (11) of said single column (13).

**20.** The receiver (3) of any preceding claim 18 -19 further adapted for

a) combining the selected weighted u -axis array signals $g(\underline{w}(\hat{u}))$ and the selected weighted v -axis array signals $g(\underline{w}(\hat{v}))$ leading to the weighted signals products $C(\underline{w}(\hat{u},\hat{v}))$, wherein each weighted signals product $C(\underline{w}(\hat{u}, \hat{v}))$

is a product of the magnitude of the respective selected weighted $u$-axis array signal $|g(\underline{w}(\hat{u}))|$ and the magnitude of the respective selected weighted $v$-axis array signal $|g(\underline{w}(\hat{v}))|$; and

b) selecting a number of $N_{RF} < N'_U \cdot N'_V$ weighted signals products $C(\underline{w}(\hat{u}, \hat{v}_2))$, the said $N_{RF}$ selected weighted signals products $C(\underline{w}(\tilde{u}, \hat{v}))$ having the $N_{RF}$ largest values of $C(\underline{w}(\hat{u}, \hat{v}_2))$,

wherein in step D) the $N_{RF}$ steering vectors for data transmission are the ones with respect to the $N_{RF}$ selected weighted signals product $C(\underline{w}(\tilde{u}, \tilde{v}))$.

**Patentansprüche**

1. Verfahren für eine Lenkvektorauswahl in einem Empfänger (3) zum Empfangen eines Funksignals, wobei der Empfänger (3) wenigstens Folgendes umfasst:

   - eine Anzahl $N_R$ von Antennen (11), die in einem zweidimensionalen Antennenarray (5) angeordnet sind, das eine Anzahl $N_X$ von Spalten (13) und eine Anzahl $N_Y$ von Zeilen (12) aufweist, wobei $n_x$ ein Spaltenindex $n_x$ = 1, ..., $N_X$ und $n_y$ ein Zeilenindex $n_y$ = 1, ..., $N_Y$ ist; und
   - eine Anzahl $N_{RF}$ von Signalverarbeitungspfaden (9) zum Verarbeiten mehrerer Empfangssignale $r_{n_x, ny}$ ist, wobei $N_{RF} < N_R$,

   wobei das Verfahren wenigstens die folgenden Schritte umfasst:

   A) Empfangen eines Empfangssignals $r_{n_x, n_y}$ an jeder jeweiligen Antenne (11);
   B) für eine einzelne Zeile (12) des zweidimensionalen Antennenarrays (5), Bestimmen einer Anzahl $N_u$ von gewichteten $u$-Achsen-Arraysignalen $g(\underline{w}(u))$, wobei jedes gewichtete $u$-Achsen-Arraysignal $g(\underline{w}(u))$ alle Empfangssignale $r_{nx,ny}$ der einen einzelnen Zeile (12) reflektiert, die durch einen Lenkvektor $\underline{w}(u)$ verarbeitet wird, wobei $u$ = 1, ..., $N_U$ ein Index für den Lenkvektor $\underline{w}(u)$ ist;

   C) Auswählen einer Anzahl von $N'_U < N_U$ $N_U$ gewichteten $u$-Achsen-Arraysignalen $g(\underline{w}(u))$, wobei die $N'_U$

   ausgewählten gewichteten $u$-Achsen-Arraysignale $g(\underline{w}(\hat{u}))$ die $N'_U$ größten Werte von $|g(\underline{w}(u))|$ aufweisen; und
   D) basierend auf den ausgewählten gewichteten $u$-Achsen-Arraysignalen $g(\underline{w}(\hat{u}))$, Bestimmen wenigstens einer Anzahl $N_{RF}$ von Lenkvektoren $\underline{w}(\tilde{u}, \tilde{v})$ für eine Datenübertragung, wobei jeder Lenkvektor durch ein Paar von Ortsfrequenzindizes $(\tilde{u}, \tilde{v})$ indiziert wird.

2. Verfahren nach einem der vorhergehenden Ansprüche, wobei in Schritt D) gewichtete Signale des rechteckigen Arrays $g(\underline{w}(\tilde{u}, \tilde{v}))$ als Summen der Empfangssignale $r_{nx,ny}$, deren Phase um eine Phase von $2\pi\left(\frac{n_x\tilde{u}}{N_X} + \frac{n_y\tilde{v}}{N_Y}\right)$ verschoben ist, an allen den Antennen (11) des rechteckigen Antennenarrays (5) bestimmt werden.

3. Verfahren nach einem der vorhergehenden Ansprüche, wobei in Schritt B) die gewichteten $u$-Achsen-Arraysignale $g(\underline{w}(u))$ als Summen der Empfangssignale $r_{nx,ny}$, deren Phase um eine Phase von $2\pi n_x u/N_X$ verschoben ist, an allen Antennen (11) der einzelnen Zeile (12) bestimmt werden.

4. Verfahren nach einem der vorhergehenden Ansprüche, das ferner die folgenden Schritte umfasst:

   B1) für eine einzelne Spalte (13) des zweidimensionalen rechteckigen Antennenarrays (5), Bestimmen einer Anzahl $N_v$ von gewichteten $v$-Achsen-Arraysignalen $g(\underline{w}(v))$, wobei jedes gewichtete $v$-Achsen-Arraysignal $g(\underline{w}(v))$ alle Empfangssignale $r_{nx,ny}$ der einen einzelnen Spalte (13) reflektiert, die durch einen Lenkvektor $\underline{w}(v)$ verarbeitet wird, wobei $v$ = 1, ..., $N_V$ der Index für den Lenkvektor $\underline{w}(v)$ ist; und

   C1) Auswählen einer Anzahl von $N'_V < N_V$ $N_V$ gewichteten $v$-Achsen-Arraysignalen $g(\underline{w}(v))$, wobei die $N'_V$

   $N_V$ ausgewählten gewichteten $v$-Achsen-Arraysignale $g(\underline{w}(\hat{v}))$ die $N'_V$ größten Werte von $|g(\underline{w}(v))|$ aufweisen.

5. Verfahren nach Anspruch 4, wobei in Schritt B1) die gewichteten $v$-Achsen-Arraysignale $g(\underline{w}(v))$ als Summen der Empfangssignale $r_{nx,ny}$, deren Phase um eine Phase von $2\pi n_y v/N_Y$ verschoben ist, an allen Antennen (11) der einzelnen Spalte (13) bestimmt werden.

6. Verfahren nach einem der Ansprüche 4 bis 5, das ferner die folgenden Schritte umfasst:

a) Kombinieren der ausgewählten gewichteten $u$-Achsen-Arraysignale $g(\underline{w}(\hat{u}))$ und der ausgewählten gewichteten $v$- Achsen-Arraysignale $g(\underline{w}(\hat{v}))$, was zu gewichteten Signalprodukten $C(\underline{w}(\hat{u}, \hat{v}))$ führt, wobei jedes gewichtete Signalprodukt $C(\underline{w}(\hat{u}, \hat{v}))$ ein Produkt der Norm des jeweiligen ausgewählten gewichteten $u$-Achsen-Arraysignals $= |g(\underline{w}(\hat{u}))|$ und der Norm des jeweils ausgewählten gewichteten v-Achsen-Arraysignals $|g(\underline{w}(\hat{v}))|$ ist; und

b) Auswählen einer Anzahl $N_{RF} < N_U' \cdot N_V'$ von gewichteten Signalprodukten $C(\underline{w}(\hat{u}, \hat{v}))$, wobei die $N_{RF}$ ausgewählten gewichteten Signalprodukte $C(\underline{w}(\tilde{u}, \tilde{v}))$ die $N_{RF}$ größten Werte von $C(\underline{w}(\hat{u}, \hat{v}))$ aufweisen,

wobei in Schritt D) die $N_{RF}$ Lenkvektoren für die Datenübertragung diejenigen hinsichtlich der $N_{RF}$ ausgewählten gewichteten Signalprodukte $C(\underline{w}(\hat{u}, \tilde{v}))$ sind.

7. Verfahren nach Anspruch 6, wobei eine Berechnungszeit zu $N_V + N_U$ proportional ist und wobei eine Rechenkomplexität zu $N_X N_U + N_Y N_V + N_U' N_V'$ proportional ist.

8. Verfahren nach einem der Ansprüche 4 bis 5, wobei das Verfahren ferner Folgendes umfasst:

i) Berechnen eines gewichteten Signals des rechteckigen Arrays $g(\underline{w}(\hat{u}, \hat{v}))$ für jede Kombination von Indizes $\hat{u}$ und $\hat{v}$, wobei $\hat{u}$ und $\hat{v}$ die ausgewählten Ortsfrequenzindizes hinsichtlich der größten $N_U'$ und $N_V'$ Norm von $|g(\underline{w}(u))|$ beziehungsweise $|g(\underline{w}(v))|$ sind, und

ii) Auswählen einer Anzahl von $N_{RF}$ Ergebnissen aus der berechneten Norm der gewichteten Signale des rechteckigen Arrays $= |g(\underline{w}(\hat{u}, \hat{v}))|$, wobei die $N_{RF}$ ausgewählte Norm der gewichteten Signale des rechteckigen Arrays $= |g(\underline{w}(\hat{u}, \hat{v}))|$ die $N_{RF}$ größten Werten von $|g(\underline{w}(\hat{u}, \hat{v}))|$ aufweisen, wobei in Schritt D) die $N_{RF}$ Lenkvektoren für die Datenübertragung diejenigen hinsichtlich der $N_{RF}$ ausgewählten Normen der gewichteten Signalprodukte $|g(\underline{w}(\hat{u}, \tilde{v}))|$ sind.

9. Verfahren nach Anspruch 8, wobei eine Berechnungszeit zu $N_U + N_V + N_U' N_V'$ proportional ist und die Rechenkomplexität zu $N_X N_U + N_Y N_V + N_X N_Y N_U' N_V'$ proportional ist.

10. Verfahren nach einem der Ansprüche 1 bis 3, wobei in Schritt D) ein gewichtetes Signal des rechteckigen Arrays $|g(\underline{w}(\hat{u}, v))|$ für jeden Index $\hat{u}$ berechnet wird, wobei $\hat{u}$ der ausgewählte Ortsfrequenzindex hinsichtlich der $N_U'$ größten Norm von $|g(\underline{w}(u))|$ ist.

11. Verfahren nach Anspruch 10, wobei das Verfahren ferner das Auswählen einer Anzahl von $N_{RF}$ Ergebnissen aus den berechneten gewichteten Signalen des rechteckigen Arrays $|g(\underline{w}(\hat{u}, v))|$ umfasst, wobei die $N_{RF}$ gewichteten Signale des rechteckigen Arrays $|g(\underline{w}(\hat{u}, \tilde{v}))|$ die $N_{RF}$ größten Werte von $|g(\underline{w}(\hat{u}, v))|$ aufweisen, wobei in Schritt D) die $N_{RF}$ Lenkvektoren für die Datenübertragung diejenigen hinsichtlich der $N_{RF}$ ausgewählten Normen der gewichteten Signale $= |g(\underline{w}(\tilde{u}, \tilde{v}))|$ sind.

12. Verfahren nach Anspruch 11, wobei eine Berechnungszeit zu $N_U + N_U' N_V$ proportional ist und die Rechenkomplexität zu $N_X N_U + N_X N_Y N_U' N_V$ proportional ist.

13. Verfahren nach einem der vorhergehenden Ansprüche, wobei die Lenkvektoren zueinander orthogonal sind.

14. Verfahren nach einem der vorhergehenden Ansprüche, wobei das Funksignal eine elektromagnetische Welle ist, die eine Frequenz über 6 GHz vorweist.

**EP 3 361 649 B1**

**15.** Empfänger (3) zum Empfangen eines Funksignals, der wenigstens Folgendes umfasst:

- eine Anzahl $N_R$ von Antennen (11), die in einem zweidimensionalen Antennenarray (5) angeordnet sind, das eine Anzahl $N_X$ von Spalten (13) und eine Anzahl $N_Y$ von Zeilen (12) aufweist, wobei $n_x$ ein Spaltenindex $n_x = 1, ..., N_X$ und $n_y$ ein Zeilenindex $n_y = 1, ..., N_Y$ ist; und
- eine Anzahl $N_{RF}$ von Signalverarbeitungspfaden (9) zum Verarbeiten mehrerer Empfangssignale $r_{n_x,n_y}$, wobei $N_{RF} < N_R$, ist,

wobei die Signalverarbeitungspfade (9) des Empfängers zu Folgendem konfiguriert sind:

A) Empfangen eines Empfangssignals $r_{n_x,n_y}$ an jeder jeweiligen Antenne (11);
B) für eine einzelne Zeile (12) des zweidimensionalen Antennenarrays (5), Bestimmen einer Anzahl $N_u$ von gewichteten u-Achsen-Arraysignalen $g(\underline{w}(u))$, wobei jedes gewichtete u-Achsen-Arraysignal $g(\underline{w}(u))$ alle Empfangssignale $r_{n_x,n_y}$ der einen einzelnen Zeile (12) reflektiert, die durch einen Lenkvektor w(u) verarbeitet wird, wobei $u = 1, ..., N_U$ ein Index für den Lenkvektor w(u) ist;

C) Auswählen einer Anzahl $N'_U < N_U$ von gewichteten u- Achsen-Arraysignalen $g(\underline{w}(u))$, wobei die $N'_U$ ausgewählten gewichteten u- Achsen-Arraysignale $g(\underline{w}(\hat{u}))$ die $N'_U$ größten Werte von $|g(\underline{w}(u))|$ aufweisen; und
D) basierend auf den ausgewählten gewichteten u- Achsen-Arraysignalen $g(\underline{w}(\hat{u}))$, Bestimmen wenigstens einer Anzahl von Lenkvektoren $(\underline{w}(\tilde{u},\tilde{v})$ für die Datenübertragung, wobei jeder Lenkvektor durch Ortsfrequenzindizes $(\tilde{u},\tilde{v})$ indiziert wird.

**16.** Empfänger nach Anspruch 15, wobei in Schritt D) gewichtete Signale des rechteckigen Arrays $g(\underline{w}(\tilde{u},\tilde{v}))$ als Summen der Empfangssignale $r_{n_x,n_y}$, deren Phase um eine Phase von $2\pi\left(\frac{n_x\tilde{u}}{N_X} + \frac{n_y\tilde{v}}{N_Y}\right)$ verschoben ist, an allen den Antennen (11) des rechteckigen Antennenarrays (5) bestimmt werden.

**17.** Empfänger (3) nach einem der vorhergehenden Ansprüche 15-16, wobei in Schritt B) die gewichteten u-Achsen-Arraysignale $g(\underline{w}(u))$ als Summen der Empfangssignale $r_{n_x,n_y}$, deren Phase um eine Phase von $2\pi n_x u/N_X$ verschoben ist, an allen Antennen (11) der einzelnen Zeile (12) bestimmt werden.

**18.** Empfänger (3) nach dem vorhergehenden Anspruch 17, wobei die Signalverarbeitungspfade (9) ferner konfiguriert sind, um die folgenden Schritte durchzuführen:

B1) für eine einzelne Spalte (13) des zweidimensionalen rechteckigen Antennenarrays (5), Bestimmen einer Anzahl $N_v$ von gewichteten v-Achsen-Arraysignalen $g(\underline{w}(v))$, wobei jedes gewichtete v-Achsen-Arraysignal $g(\underline{w}(v))$ alle Empfangssignale $r_{n_x,n_y}$ der einen einzelnen Spalte (13) reflektiert, die durch einen Lenkvektor $\underline{w}(v)$ verarbeitet wird, wobei $v = 1, ..., N_v$ der Index für den Lenkvektor $\underline{w}(v)$ ist; und

C1) Auswählen einer Anzahl von $N'_V < N_V$ gewichteten v-Achsen-Arraysignalen $g(\underline{w}(v))$, wobei die $N'_V$ ausgewählten gewichteten v-Achsen-Arraysignale $g(\underline{w}(\hat{v}))$ die $N'_V$ größten Werte von $|g(\underline{w}(v))|$ aufweisen.

**19.** Empfänger (3) nach Anspruch 18, wobei in Schritt B1) die gewichteten v-Achsen-Arraysignale $g(\underline{w}(v))$ als Summen der Empfangssignale $r_{n_x,n_y}$, deren Phase um eine Phase von $2\pi n_y v/N_Y$ verschoben ist, an allen Antennen (11) der einzelnen Spalte (13) bestimmt werden.

**20.** Empfänger (3) nach einem der vorhergehenden Ansprüche 18-19, der ferner für Folgendes angepasst ist:

a) Kombinieren der ausgewählten gewichteten u-Achsen-Arraysignale $g(\underline{w}(\hat{u}))$ und der ausgewählten gewichteten v-Achsen-Arraysignale $g(\underline{w}(\hat{v}))$, was zu den gewichteten Signalprodukten $C(\underline{w}(\hat{u},\hat{v}))$ führt, wobei jedes gewichtete Signalprodukt $C(\underline{w}(\hat{u},\hat{v}))$ ein Produkt der Norm des jeweiligen ausgewählten gewichteten u-Achsen-Arraysignals $= |g(\underline{w}(\hat{u}))|$ und der Norm des jeweils ausgewählten gewichteten v-Achsen-Arraysignals $|g(\underline{w}(\hat{v}))|$ ist; und

**16**

b) Auswählen einer Anzahl $N_{RF} < N'_U \cdot N'_V$ von gewichteten Signalprodukten $C(\underline{w}(\hat{u},\hat{v}))$, wobei die $N_{RF}$ ausgewählten gewichteten Signalprodukte $C(\underline{w}(\tilde{u},\tilde{v}))$ die $N_{RF}$ größten Werte von $C(\underline{w}(\hat{\tilde{u}},\hat{v}))$ aufweisen,

wobei in Schritt D) die $N_{RF}$ Lenkvektoren für die Datenübertragung diejenigen hinsichtlich der $N_{RF}$ ausgewählten gewichteten Signalprodukte $C(\underline{w}(\tilde{u},\tilde{v}))$ sind.

## Revendications

1. Procédé pour la sélection d'un vecteur de direction dans un récepteur (3) de réception d'un signal radio, le récepteur (3) comprenant au moins

   - un nombre, $N_R$, d'antennes (11) disposées dans un réseau d'antennes bidimensionnel (5) ayant un nombre, $N_X$, de colonnes (13) et un nombre, $N_Y$, de lignes (12), $n_x$ étant un index de colonne $n_x$ = 1, ..., $N_X$ et $n_y$ étant un index de ligne $n_y$ = 1, ..., $N_Y$ ; et
   - un nombre, $N_{RF}$, de trajets de traitement de signal (9) pour traiter une multitude de signaux de réception $r_{nx,ny}$, dans lequel $N_{RF} < N_R$,

   le procédé comprenant au moins les étapes suivantes :

   A) la réception d'un signal de réception $r_{nx,ny}$ au niveau de chaque antenne respective (11) ;
   B) pour une seule ligne (12) du réseau d'antennes bidimensionnel (5), la détermination d'un nombre, $N_U$, de signaux de réseau d'axe des u pondérés $g(\underline{w}(u))$, chaque signal de réseau d'axe des u pondéré $g(\underline{w}(u))$ reflétant tous les signaux de réception $r_{nx,ny}$ de ladite une seule ligne (12) traitée par un vecteur de direction w(u), u = 1, ..., $N_u$ étant un index pour le vecteur de direction w(u) ;
   C) la sélection d'un nombre $N'_U < N_U$ de signaux de réseau d'axe des u pondérés $g(\underline{w}(u))$, lesdits $N'_U$ signaux de réseau d'axe des u pondérés sélectionnés $g(\underline{w}(\hat{u}))$ ayant les valeurs $N'_U$ les plus élevées de $|g(\underline{w}(u))|$ ; et
   D) sur la base des signaux de réseau d'axe des u pondérés sélectionnés $g(\underline{w}(\hat{u}))$, la détermination d'au moins un nombre, $N_{RF}$, de vecteurs de direction $\underline{w}(\tilde{u},\tilde{v})$ pour la transmission de données, chaque vecteur de direction étant indexé par une paire d'indices de fréquence spatiale $(\tilde{u},\tilde{v})$.

2. Procédé selon l'une quelconque des revendications précédentes, dans lequel à l'étape D) les signaux de réseau rectangulaire pondérés $g(\underline{w}(\tilde{u},\tilde{v}))$ sont déterminés comme des sommes des signaux de réception $r_{nx,ny}$, dont la phase est décalée d'une phase de

   $2\pi \left( \frac{n_x \tilde{u}}{N_X} + \frac{n_y \tilde{v}}{N_O} \right)$, au niveau de toutes les antennes (11) du réseau d'antennes rectangulaire (5).

3. Procédé selon l'une quelconque des revendications précédentes, dans lequel à l'étape B) les signaux de réseau d'axe des u pondérés $g(w(u))$ sont déterminés comme des sommes des signaux de réception $r_{nx,ny}$, dont la phase est décalée d'une phase de $2\pi n_x u / N_X$, au niveau de toutes les antennes (11) de ladite une seule ligne (12).

4. Procédé selon l'une des revendications précédentes, comprenant en outre les étapes suivantes :

   B1) pour une seule colonne (13) du réseau d'antennes rectangulaire bidimensionnel (5), la détermination d'un nombre, $N_V$, de signaux de réseau d'axe des v pondérés $g(\underline{w}(v))$, chaque signal de réseau d'axe des v pondéré $g(\underline{w}(v))$ reflétant tous les signaux de réception $r_{nx,ny}$ de ladite une seule colonne (13) traitée par un vecteur de direction $\underline{w}(v)$, v = 1, ..., Nv étant l'index pour le vecteur de direction $\underline{w}(v)$ ; et

   C1) la sélection d'un nombre de $N'_V < N_V$ signaux de réseau d'axe des v pondérés $g(\underline{w}(v))$, lesdits $N'_V$ signaux de réseau d'axe des v pondérés sélectionnés $g(\underline{w}(\hat{v}))$ ayant les $N'_V$ valeurs les plus élevées de $|g(\underline{w}(v))|$.

**5.** Procédé selon la revendication 4, dans lequel à l'étape B1) les signaux de réseau d'axe des v pondérés $g(\underline{w}(v))$ sont déterminés comme des sommes des signaux de réception $r_{n_x,n_y}$, dont la phase est décalée d'une phase de $2\pi n_y v/N_0$, au niveau de toutes les antennes (11) de ladite seule colonne (13).

**6.** Procédé selon l'une des revendications 4 à 5, comprenant en outre les étapes suivantes :

a) la combinaison des signaux de réseau d'axe des u pondérés sélectionnés $g(\underline{w}(\hat{u}))$ et les signaux de réseau d'axe des v pondérés sélectionnés $g(\underline{w}(\hat{v}))$ conduisant à des produits de signaux pondérés $C(\underline{w}(\hat{u},\hat{v}))$, chaque produit de signaux pondérés $C(\underline{w}(\hat{u},\hat{v}))$ étant un produit de l'amplitude du signal de réseau d'axe des u sélectionné respectif $|g(\underline{w}(\hat{u}))|$ et de l'amplitude du signal de réseau d'axe des v pondéré sélectionné respectif $|g(\underline{w}(\hat{v}))|$; et

b) la sélection d'un nombre $N_{RF} < N_U' \cdot N_V'$, de produits de signaux pondérés $C(\underline{w}(\tilde{u},\tilde{v}))$, lesdits produits des $N_{RF}$ signaux pondérés sélectionnés $C(\underline{w}(\tilde{u},\tilde{v}))$ ayant $N_{RF}$ valeurs les plus élevées de $C(\underline{w}(\tilde{u},\tilde{v}))$,

à l'étape D) les $N_{RF}$ vecteurs de direction pour la transmission de données étant ceux par rapport au produit des $N_{RF}$ signaux pondérés sélectionné $C(\underline{w}(\tilde{u},\tilde{v}))$.

**7.** Procédé selon la revendication 6, dans lequel un temps de calcul est proportionnel à $Nv + N_U$, et dans lequel une complexité de calcul est proportionnelle à $N_X N_U + N_Y N_V + N_U' N_V'$.

**8.** Procédé selon l'une des revendications 4 à 5, le procédé comprenant en outre :

i) le calcul d'un signal de réseau rectangulaire pondéré $g(\underline{w}(\tilde{u},\tilde{v}))$ pour chaque combinaison d'indices $\hat{u}$ et $\hat{v}$, dans lequel $\hat{u}$ et $\hat{v}$ sont les indices de fréquence spatiale sélectionnés par rapport à l'amplitude $N_U'$ et $N_V'$ la plus élevée de $|g(\underline{w}(u))|$ et $|g(\underline{w}(v))|$ respectivement, et

ii) la sélection d'un nombre de $N_{RF}$ résultats à partir de l'amplitude calculée des signaux de réseau rectangulaire pondérés $|g(\underline{w}(\hat{u},\hat{v}))|$, ladite $N_{RF}$ amplitude sélectionnée des signaux de réseau rectangulaire pondérés $|g(\underline{w}(\tilde{u},\tilde{v}))|$ ayant $N_{RF}$ valeurs les plus élevées $|g(\underline{w}(\tilde{u},\tilde{v}))|$, à l'étape D) les $N_{RF}$ vecteurs de direction pour la transmission de données étant ceux par rapport aux $N_{RF}$ amplitudes sélectionnées des produits de signaux pondérés $|g(\underline{w}(\tilde{u},\tilde{v}))|$.

**9.** Procédé selon la revendication 8, dans lequel un temps de calcul est proportionnel à $N_U + N_V + N_U' N_V'$, et la complexité de calcul est proportionnelle à $N_X N_U + N_Y N_V + N_X N_Y N_U' N_V'$.

**10.** Procédé selon l'une quelconque des revendications 1 à 3, dans lequel à l'étape D) un signal de réseau rectangulaire pondéré $|g(\underline{w}(\hat{u},v))|$ est calculé pour chaque indice $\hat{u}$, dans lequel $\hat{u}$ est l'index de fréquence spatiale sélectionné par rapport à l'amplitude $N_U'$ la plus élevée de $|g(\underline{w}(u))|$.

**11.** Procédé selon la revendication 10, dans lequel le procédé comprend en outre la sélection d'un nombre de $N_{RF}$ résultats à partir des signaux de réseau rectangulaire pondérés calculés $|g(\underline{w}(\hat{u},v))|$, lesdits $N_{RF}$ signaux de réseau rectangulaire pondérés sélectionnés $|g(\underline{w}(\tilde{u},\tilde{v}))|$ ayant les $N_{RF}$ valeurs les plus élevées de $= |g(\underline{w}(\hat{u},v))|$, à l'étape D) les $N_{RF}$ vecteurs pour la transmission de données étant ceux par rapport aux $N_{RF}$ amplitudes sélectionnées des signaux pondérés $|g(\underline{w}(\tilde{u},\tilde{v}))|$.

**12.** Procédé selon la revendication 11, dans lequel un temps de calcul est proportionnel à $N_U + N_U' N_V$ et la complexité de calcul est proportionnelle à $N_X N_U + N_X N_Y N_U' N_V$.

**13.** Procédé selon l'une quelconque des revendications précédentes, dans lequel les vecteurs de direction sont orthogonaux les uns aux autres.

**14.** Procédé selon l'une quelconque des revendications précédentes, dans lequel le signal radio est une onde électromagnétique présentant une fréquence supérieure à 6 GHz.

15. Récepteur (3) pour recevoir un signal radio comprenant au moins

 - un nombre, $N_R$, d'antennes (11) agencées dans un réseau d'antennes bidimensionnel (5) ayant un nombre, $N_X$, de colonnes (13) et un nombre, $N_Y$, de lignes (12), $n_x$ étant un index de colonne $n_x = 1, ..., N_X$ et $n_y$ est un index de ligne $n_y = 1, ..., N_Y$; et
 - un nombre, $N_{RF}$, de trajets de traitement de signal (9) pour traiter une multitude de signaux de réception $r_{nx,ny}$, dans lequel $N_{RF} < N_R$,

dans lequel les trajets de traitement de signal (9) du récepteur sont configurés pour

A) recevoir un signal de réception $r_{nx,ny}$ au niveau de chaque antenne respective (11) ;
B) pour une seule ligne (12) du réseau d'antennes bidimensionnel (5), déterminer un nombre, $N_U$, de signaux de réseau d'axe des u pondérés $g(\underline{w}(u))$, chaque signal de réseau d'axe des u pondéré $g(\underline{w}(u))$ reflétant tous les signaux de réception $r_{nx,ny}$ de ladite une seule ligne (12) traitée par un vecteur de direction w(u), dans lequel u = 1,..., $N_U$ étant un index pour le vecteur de direction $\underline{w}(u)$ ;

C) sélectionner un nombre $N_U' < N_U$ de signaux de réseau d'axe des u pondérés $|g(\underline{w}(u))|$, lesdits $N_U'$ signaux de réseau d'axe des u pondérés sélectionnés $g(\underline{w}(\hat{u}))$ ayant les $N_U'$ valeurs les plus élevées de $g(\underline{w}(u))$ ; et

D) sur la base des signaux de réseau d'axe des u pondérés sélectionnés $g(\underline{w}(\hat{u}))$, déterminer au moins un nombre de vecteurs de direction $\underline{w}(\tilde{u},\tilde{v})$ pour la transmission de données, chaque vecteur de direction étant indexé par des indices de fréquence spatiale $(\tilde{u},\tilde{v})$.

16. Récepteur selon la revendication 15, dans lequel à l'étape D) les signaux de réseau rectangulaire pondérés $g(\underline{w}(\tilde{u},\tilde{v}))$ sont déterminés comme des sommes des signaux de réception $r_{nx,ny}$, dont la phase est décalée d'une phase de

$$2\pi \left(\frac{n_x \tilde{u}}{N_X} + \frac{n_y \tilde{v}}{N_O}\right),$$ au niveau de toutes les antennes (11) du réseau d'antennes rectangulaire (5).

17. Récepteur (3) selon l'une quelconque des revendications 15 à 16, dans lequel à l'étape B) les signaux du réseau d'axe des u pondérés $g(\underline{w}(u))$ sont déterminés comme des sommes des signaux de réception $r_{nx,ny}$, dont la phase est décalée d'une phase de $2\pi n_x u/N_X$, au niveau de toutes les antennes (11) de ladite une seule ligne (12).

18. Récepteur (3) selon la revendication 17, dans lequel les trajets de traitement de signal (9) sont en outre configurés pour effectuer les étapes consistant à

B1) pour une seule colonne (13) du réseau d'antennes rectangulaire bidimensionnel (5), déterminer un nombre, $N_V$, de signaux de réseau d'axe des v pondérés $g(\underline{w}(v))$, chaque signal de réseau d'axe des v pondéré $g(\underline{w}(v))$ reflétant tous les signaux de réception $r_{nx,ny}$, de ladite une seule colonne (13) traitée par un vecteur de direction $\underline{w}(v)$, v = 1, ..., $N_V$ étant l'index pour le vecteur de direction $\underline{w}(v)$ ; et

C1) sélectionner un nombre de $N_V' < N_V$ signaux de réseau d'axe des v pondérés $g(\underline{w}(v))$, lesdits $N_V'$ signaux de réseau d'axe des v pondérés sélectionnés $g(\underline{w}(v))$ ayant les $N_V'$ valeurs les plus élevées de $g(\underline{w}(\hat{v}))$.

19. Récepteur (3) selon la revendication 18, dans lequel à l'étape B1) les signaux du réseau d'axe v pondérés $g(\underline{w}(v))$ sont déterminés comme des sommes des signaux de réception $r_{nx,ny}$, dont la phase est décalée d'une phase de $2\pi n_y v/N_O$, au niveau de toutes les antennes (11) de ladite une seule colonne (13).

20. Récepteur (3) selon l'une quelconque des revendications 18 à 19 précédentes, adapté en outre pour

a) combiner des signaux de réseau d'axe des u pondérés sélectionnés $|g(\underline{w}(\hat{u}))|$ et des signaux de réseau d'axe des v pondérés sélectionnés $|g(\underline{w}(\tilde{v}))|$ conduisant aux produits de signaux pondérés $C(\underline{w}(\hat{u},\hat{v}))$, chaque produit de signaux pondérés $C(\underline{w}(\hat{u}\hat{v}))$ étant un produit de l'amplitude du signal de réseau d'axe des u sélectionné

respectif $g(\underline{w}(\hat{u}))$ et de l'amplitude du signal de réseau d'axe des v pondéré sélectionné respectif $g(\underline{w}(\hat{v}))$; et

b) sélectionner nombre de $N_{RF} < N'_U \cdot N'_V$ produits de signaux pondérés $C(\underline{w}(\hat{u}\hat{v}))$ desdits produits des $N_{RF}$ signaux pondérés sélectionnés $C(\underline{w}(\tilde{u},\tilde{v}))$ ayant NRF valeurs les plus élevées $C(\underline{w}(\hat{u}\hat{v}))$,

dans lequel à l'étape D) les $N_{RF}$ vecteurs de direction pour la transmission de données sont ceux par rapport au produit des $N_{RF}$ signaux pondérés sélectionné $C(\underline{w}(\tilde{u},\tilde{v}))$.

**Fig. 1**

**Fig. 2**

**Fig. 3**

**Fig. 4**

**Fig. 5**

**Fig. 6**

**Fig. 7a**

**Fig. 7b**

$\left| g(\underline{w}(u)) \right|$

$N_U = 8$

**Fig. 8a**

$\left| g(\underline{w}(v)) \right|$

$N_V = 6$

**Fig. 8b**

$\left| g(\underline{w}(\hat{u})) \right|$

**Fig. 9a**

$\left| g(\underline{w}(\hat{v})) \right|$

**Fig. 9b**

$$C\left(\underline{w}(\hat{u}, \hat{v})\right)$$

**Fig. 10**

$$C\left(\underline{w}(\tilde{u}, \tilde{v})\right)$$

**Fig. 11**

**Fig. 12**

$|g(w(\hat{u}, \hat{v}))|$

**Fig. 13**

$\left|g\left(\underline{w}(\tilde{u}, \tilde{v})\right)\right|$

Fig. 14

$\left| g(\underline{w}(\hat{u}, v)) \right|$

$v_6$  $v_5$  $v_4$  $v_3$  $v_2$  $v_1$

18  11  17

$u_2$  $u_4$  $u_6$

$v$  $u$

Fig. 15

$\left| g(\underline{w}(\tilde{u}, \tilde{v})) \right|$

$v_3$  $v_2$

18  11  17

$u_2$  $u_4$  $u_6$

$v$  $u$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016074706 A1
- US 20160173176 A1